# EUROPÄISCHE PATENTSCHRIFT

(11) **EP 2 093 133 B1**
(45) Veröffentlichungstag und Bekanntmachung des Hinweises auf die Patenterteilung: **30.10.2013**
(21) Anmeldenummer: 09000690.9
(22) Anmeldetag: 20.01.2009
(51) Int. Cl.: B62D 33/06, B60N 3/18

(54) **Fahrerhaus eines Nutzfahrzeugs**
Driver cab of a commercial vehicle
Cabine de conducteur d'un véhicule utilitaire

(30) Priorität: 20.02.2008 DE 102008010134
(43) Veröffentlichungstag der Anmeldung: 26.08.2009
(73) Patentinhaber: MAN Truck & Bus AG, 80995 München (DE)
(72) Erfinder: Rohrmüller, Hans, 82216 Maisach (DE); Kneifel, Eberhard, 89250 Senden (DE)

(56) Entgegenhaltungen:
- WO-A-2007/101938
- DE-A1- 2 114 554
- DE-A1-102004 025 248
- DE-A1-102005 012 314
- DE-U- 1 612 401
- FR-A- 2 798 630
- GB-A- 292 316
- US-A- 4 917 430
- US-B1- 6 817 642

## Beschreibung

### Technisches Gebiet:

Die Erfindung betrifft ein Fahrerhaus eines Nutzfahrzeugs mit einem von außen zugänglichen, mittels einer Klappe verschließbaren Stauraum, der im hinteren Bereich einer Fahrerhausseitenwand zumindest teilweise oberhalb eines Kotflügels angeordnet ist.

### Stand der Technik:

Fahrerhäuser für Nutzfahrzeuge lassen sich in zwei wesentliche Gruppen unterteilen. Zum einen sind die sog. kurzen Fahrerhäuser bekannt, die üblicherweise im Nah- bzw. im Verteilerverkehr eingesetzt werden. Zum anderen werden im Fernverkehr lange Fahrerhäuser eingesetzt, die im hinteren Bereich angrenzend an den Fahrer- sowie bei Beifahrersitz eine Kabine mit ein oder zwei Liegen aufweisen. Diese langen Fahrerhäuser verfügen üblicherweise im Bereich der Seitenwand hinter der Fahrer- sowie Beifahrertür oberhalb des Kotflügels über einen von außen zugänglichen Stauraum, in dem der Fahrer beispielsweise Werkzeug, Wagenheber oder ähnliches aufbewahren kann.

In diesem Zusammenhang ist aus der DE 10 2005 002 577 B3 ein Fahrerhaus für ein Nutzfahrzeug mit einem sich zumindest teilweise über die Fahrerhausbreite erstreckenden Stauraum bekannt. Der beschriebene Stauraum ist im hinteren Bereich einer Fahrerhausseitenwand oberhalb des Kotflügels angeordnet und sowohl von innen als auch von außen über entsprechende Klappen erreichbar. Als Neuerung wird ein von innen und außen beladbares Staufachmodul beschrieben, dass in den Stauraum ein- und ausschiebbar ist. Das beschriebene Staufachmodul ermöglicht es dem Fahrer auf verhältnismäßig einfache Weise Zugang zu dem Staufachinhalt zu erhalten, indem er das Staufachmodul aus dem Staufach herauszieht und beispielsweise entsprechende Seitenbegrenzungen herunterklappt.

Neben Werkzeug, Lebensmitteln, Straßenkarten und ähnlichen Gebrauchsgegenständen benötigt ein Fahrer, insbesondere im Fernverkehr, Wasser, das er zum Trinken, Kochen oder zum Waschen bzw. Reinigen benötigt. Hierzu sind aus der gängigen Praxis eine Vielzahl von Befestigungsvarianten, mit denen die Fahrer Wasserbehälter an ihren Fahrzeugen befestigen, bekannt. Da die Befestigung entsprechender Wasserbehälter allerdings in aller Regel im Außenbereich des Fahrzeugs erfolgt, sind mit dieser Art der Wasserbevorratung auch Probleme, wie Verschmutzung, unkontrollierte Zugänglichkeit und, insbesondere in den Wintermonaten bzw. bei Aufenthalt in kalten Regionen, das Einfrieren verbunden.

Aus der DE 10 2004 025 248 A1 ist eine Fahrerkabine für ein Kraftfahrzeug bekannt, bei der in Bodennähe des Fahrzeugs beziehungsweise in Bodennähe eines Fahrerplatzes ein Stauraum vorgesehen ist, der durch einen horizontal angeordneten und über eine Einschubvorrichtung verstellbaren Container gebildet ist, der in einen fahrerkabinenseitigen Behälter einschiebbar ist.

Die DE 10 2005 012 314 A1 zeigt eine Stauvorrichtung für ein Kraftfahrzeug, insbesondere für einen Lastkraftwagen, mit einem Behälter, der in einer im Wesentlichen horizontalen Richtung zwischen einer ersten Position außerhalb eines Innenraums des Kraftfahrzeugs und einer zweiten Position innerhalb des Innenraums des Kraftfahrzeugs verschiebbar angeordnet ist. Der Behälter weist an seiner dem Innenraum des Kraftfahrzeugs abgewandten Seite eine, einen seitlichen Zugang zu dem Behälter ermöglichende Klappe auf.

Die GB 292 316 A betrifft eine an Fahrzeugen anbringbare Waschvorrichtung mit einem aufschwenkbaren Deckelteil.

Weiter zeigt die FR 2 798 630 A ein Leitungs- bzw. Kühlsystem in Verbindung mit einem Omnibus, mittels dem in einem Wassertank aufbewahrtes Wasser im Fahrzeuginnenraum zur Verfügung gestellt werden kann.

Ausgehend von dem bekannten Stand der Technik liegt der Erfindung die Aufgabe zugrunde, im Bereich des Fahrerhauses eines Nutzfahrzeugs eine Möglichkeit zur Bevorratung von Wasser, insbesondere Trinkwasser, vorzusehen, die eine leichte Zugänglichkeit des Wassers und dennoch einen zuverlässigen Schutz gegen unerlaubten Zugriff sicherstellt. Hierbei sollte das Wasser vorzugsweise frostgeschützt aufbewahrt werden, und für den Fahrer auf einfache Weise aus einem Vorratsbehälter zu entnehmen sein. Weiterhin soll beachtet werden, dass auch die Befüllung des Wasserbehälters vergleichsweise einfach möglich ist.

Die vorgenannte Aufgabe wird mit den Merkmalen des Anspruchs 1 gelöst. Vorteilhafte Ausführungsformen der Erfindung sind Gegenstand der abhängigen Ansprüche

Erfindungsgemäß ist der Stauraum nicht nur von außen, sondern auch aus dem Innenraum des Nutzfahrzeugfahrerhauses zugänglich. Hierzu ist im Innenraum des Nutzfahrzeugs, beispielsweise im Bereich unterhalb der unteren Liege, eine Klappe oder eine Schiebetür vorgesehen, so dass der Fahrer aus dem Innenraum des Fahrerhauses Zugang zum Stauraum hat. Bei einer derartigen Ausgestaltung der Erfindung ist der Wasserbehälter innerhalb des Stauraums derart anzuordnen, dass der Fahrer auch von innen einen freien Zugang zur Ablagefläche des Stauraums erhält. Gemäß einer ersten Variante wird der Wasserbehälter in diesem Fall unterhalb der Ablagefläche angeordnet, während eine zweite Variante eine seitliche Befestigung des Wasserbehälters in einem oberen Eckbereich des Stauraums vorsieht, so dass ein Fahrer, wenn er aus dem Innenraum des Fahrerhauses in den Stauraum hineingreift, einen freien Zugriff an dem Wasserbehälter vorbei auf die Ablagefläche erhält.

Mit dem erfindungsgemäß ausgeführten Stauraum eines Nutzfahrzeugfahrerhauses ist es somit möglich, im Bereich des Fahrerhauses, und zwar innen liegend, einen Behälter zur Bevorratung von Trinkwasser vorzusehen. Hierbei sind die im ersten Bereich des Staufachs vorgesehenen Aufnahmemitteln derart aufgeführt, dass der Wasserbehälter in den Stauraum eingeführt und dort befestigt werden kann. Es handelt sich hierbei um eine feste, aber gleichzeitig lösbare Befestigung des Wasserbehälters im ersten Bereich des Stauraums. Insbesondere zum Befüllen des Wasserbehälters ist es somit möglich, den Wasserbehälter aus dem Staufach zu entnehmen, aufzufüllen und anschließend wieder im gefüllten Zustand in der Aufnahme des Staufachs in deren ersten Bereich zu befestigen. Durch die Anordnung des Wasserbehälters im Inneren des Staufachs ist das Wasser über die Innentemperatur der Kabine weitgehend vor Frost geschützt und nur durch den Fahrer bzw. eine autorisierte Person durch Öffnen des Staufachdekkels zu erreichen. Gleichzeitig stellt der Behälter ein einfaches Befüllen sowie Entnehmen von Wasser sicher.

In einer vorteilhaften Ausführungsform der Erfindung ist der im ersten Bereich des Staufachs mit Hilfe von geeigneten Aufnahmemitteln befestigte Wasserbehälter annähernd quaderförmig ausgeführt, wobei sich seine Breite bzw. Länge im Wesentlichen an den Abmessungen des Fahrerhausstaufachs orientiert, während die Höhe des Wasserbehälters vergleichsweise klein ist. Vorzugsweise wird der Wasserbehälter hierbei derart dimensioniert, dass er auch in einem mit Wasser gefüllten Zustand leicht vom Fahrer zu tragen, hochzuheben, in den Stauraum einzuschieben und dort zu befestigen ist. Hierbei ermöglicht es die erfindungsgemäße Anordnung eines Wasserbehälters im Inneren eines Fahrerhausstaufaches, dass der Fahrer mit dem entleerten Behälter zu einer Wasserstelle gehen kann, um dort den Behälter mit Wasser zu füllen. Selbstverständlich ist es ebenfalls denkbar, die Befüllöffnung derart am Behälter anzuordnen, dass der Wasserbehälter, beispielsweise in einem leicht ausgeschobenen Zustand, auch mit Hilfe eines Schlauches befüllbar ist. Das Vorhandensein eines Füllschlauches ist bei der erfindungsgemäßen lösbar festen Anordnung des Wasserbehälters im Inneren des Stauraums aber nicht zwingend erforderlich.

Im Übrigen zeichnet sich die erfindungsgemäße Anordnung eines Wasserbehälters im Inneren eines Fahrerhausstauraums dadurch aus, dass ein zweiter Bereich vorgesehen ist, in dem sich eine Ablagefläche zur Aufbewahrung weiterer Gegenstände befindet. Auf dieser Ablagefläche ist es möglich, Werkzeug, Lebensmittel, Straßenkarten oder ähnliche Utensilien, die der Fahrer an seinen Rastpunkten gegebenenfalls benötigt, aufzubewahren. Ein erfindungsgemäß ausgeführtes Staufach eines Nutzfahrzeugfahrerhauses kombiniert somit auf bevorzugte Weise eine Möglichkeit zur sicheren und hygienischen Bevorratung von Wasser mit der Möglichkeit zur Bevorratung weiterer Gegenstände.

Wie bereits ausgeführt worden ist, zeichnet sich die lösbar feste Befestigung des Wasserbehälters in der Aufnahme des Stauraums dadurch aus, dass der Fahrer den Wasserbehälter dem Staufach entnehmen, und ihn dort auch wieder verstauen kann. Hierzu verfügt der Wasserbehälter in einer vorteilhaften Weiterbildung der Erfindung wenigstens einen Handgriff, so dass der Fahrer den Behälter leicht ergreifen und tragen kann. Vorzugsweise verfügt der Wasserbehälter über ein Füllvolumen von nicht mehr als zehn Litern (V=0,01 m³). Ganz besonders geeignet ist in diesem Zusammenhang ein Füllvolumen zwischen fünf und zehn Litern (V=0,005 m³ bis 0,01 m³). Ein derartiges Füllvolumen ermöglicht es dem Fahrer, den Wasserbehälter auch in gefülltem Zustand leicht zu tragen und nach dem Befüllen wieder im Stauraum des Nutzfahrzeugfahrerhauses zu befestigen.

Eine weitere besondere Ausgestaltung der Erfindung sieht vor, dass der Wasserbehälter in Form eines geraden Prismas ausgeführt ist. Eine derartige Form des Wasserbehälters ermöglicht es, die entsprechenden Aufnahmemittel derart auszuführen, dass der Wasserbehälter in dem oberen Eckbereich des Stauraums lösbar fest befestigbar ist. Lediglich der Vollständigkeit halber wird darauf hingewiesen, dass auch in diesem Fall der in Art eines Prismas ausgeführte Wasserbehälter bevorzugterweise an einem Hochpunkt über eine Befüllöffnung und an einem Tiefpunkt über eine Entnahmeöffnung verfügt.

Die Entnahmeöffnung des Wasserbehälters ist vorteilhafter Weise derart angeordnet, dass sie leicht für den Fahrer zugänglich ist. In diesem Zusammenhang ist vorgesehen, dass der Fahrer den Wasserbehälter stückweise aus dem Stauraum herausziehen kann, so dass Wasser, das dem Behälter entnommen wird, nicht in den Stauraum hineinläuft, sondern in jedem Fall außerhalb des Fahrzeugs verbleibt. Eine besonders geeignete konstruktive Lösung der Erfindung sieht in diesem Zusammenhang vor, dass die Aufnahmemittel in Form von Fügungsschienen ausgebildet sind, in denen der Wasserbehälter, der entsprechende Gleit- und/oder Rollelemente aufweist, in den Stauraum eingeschoben bzw. aus dem Stauraum herausgezogen wird.

Dabei können die Aufnahmemittel in Art eines Schlittens ausgeführt sein. Hierbei sind der feste Teil des Schlittens am Staufach und der bewegliche Teil des Schlittens am Wasserbehälter befestigt. Um den Wasserbehälter in diesem Fall dem Staufach entnehmen zu können, wird der bewegliche Schlitten mit dem Wasserbehälter aus dem Stauraum herausgezogen und schließlich die vorgesehenen Befestigungsmittel gelöst.

Der beschriebene Wasserbehälter ist für eine Benutzung besonders geeignet, sofern er über wenigstens eine Befüll- und eine Entnahmeöffnung verfügt. Vorteilhafter Weise sind hierbei sowohl die Entnahmeöffnung des Wasserbehälters als auch die Befüllöffnung verschließbar ausgeführt. Hierbei ist es denkbar, dass das Verschlussmittel der Öffnungen als Stopfen, Schraubdeckel oder auch als Klappe ausgeführt ist.

In Ergänzung zu dem Vorgesagten ist es ferner vorteilhaft insbesondere die Befüllöffnung trichterartig auszuführen, so dass ein Befüllen des Wasserbehälters auf besonders einfache Weise möglich ist.

In bevorzugter Weise ist die Entnahmeöffnung eines Wasserbehälters an einem Tiefpunkt des Behälters vorgesehen. Alternativ oder in Ergänzung hierzu ist es ebenfalls denkbar, die Aufnahmemittel im Stauraum derart auszubilden, dass der Wasserbehälter beim Herausziehen aus dem Stauraum leicht nach unten geneigt wird, so dass das im Behälter befindliche Wasser in jedem Falle zur Auslauföffnung, die geeigneter Weise im vorderen bereich des Behälters angeordnet ist, fließt.

Um die Entnahme des Wassers aus der Entnahmeöffnung möglichst komfortabel zu gestalten, werden bevorzugt Dreh- oder Kugelventile verwendet. Das Wasser kann in diesem Fall durch den Fahrer über einen derart ausgebildeten Wasserhahn in gewohnter Weise entnommen werden. Ergänzend hierzu ist es wiedrum denkbar, die mit einem Ventil versehene Entnahmeöffnung derart auszuführen, dass ein handelsüblicher Wasserschlauch unmittelbar oder über eine geeignete Kupplung an der Öffnung befestigbar ist.

Im Folgenden wird die Erfindung ohne Beschränkung des allgemeinen Erfindungsgedankens anhand von Ausführungsbeispielen unter Bezugnahme auf die Figuren näher erläutert. Es zeigen
- Figur 1:: Seitenansicht eines Nutzfahrzeugfahrerhauses;
- Figur 2:: Stauraum eines Nutzfahrzeugfahrerhauses mit einem im oberen Eckbereich angeordneten Wasserbehälter;
- Figur 2a: Einen Wasserbehälter in einer Ansicht
- Figur 2b: Eine Schnittansicht des Wasserbehälters in Figur 2a
- Figur 3:: Stauraum eines Nutzfahrzeugfahrerhauses mit einem im unteren Bereich des Stauraums angeordneten Wasserbehälter
- Figur 4:: Stauraum eines Nutzfahrzeugfahrerhauses mit einem im oberen Bereich angeordneten Wasserbehälter. (nicht erfindungsgemäße Ausführungsform).

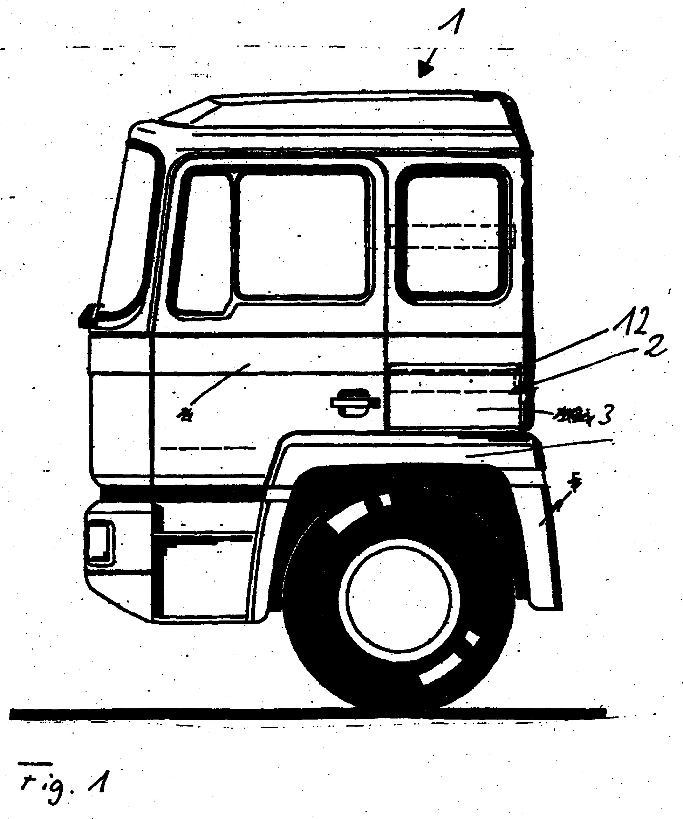

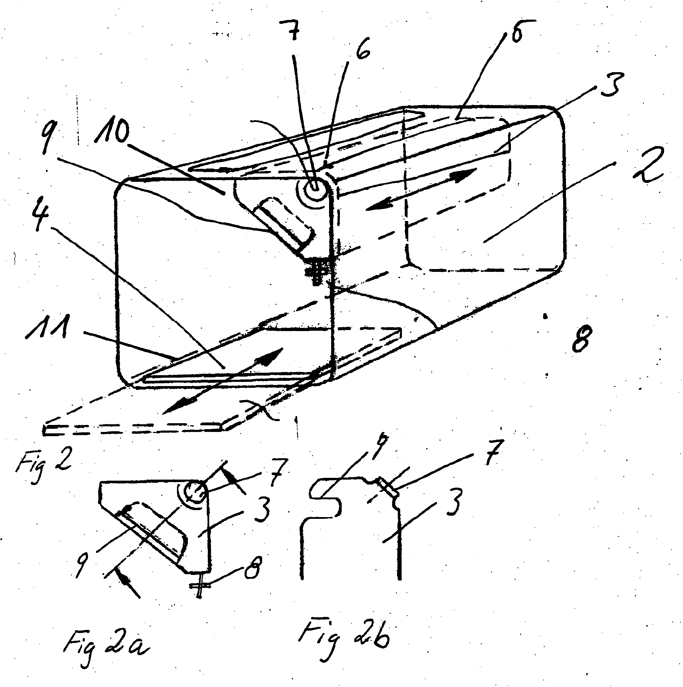

In Figur 1 ist das Fahrerhaus 1 eines Nutzfahrzeugs in seiner seitlichen Ansicht dargestellt. Im Bereich hinter der Fahrer- und Beifahrertür oberhalb der Kotflügel sind beidseitig Stauräume 2 vorgesehen, die mit Hilfe einer nach oben oder nach unter verschwenkbaren Klappe 12 verschließbar sind. Die in Figur 1 dargestellte Seitenansicht eines Nutzfahrzeugfahrerhauses 1 zeigt den hinter dem Fahrersitz befindlichen Stauraum 2 mit einer geschlossenen Stauraumklappe 12. In den im Folgenden beschriebenen Figuren 2, 3 und 4 ist zur besseren Anschaulichkeit lediglich der Stauraum 2 mit den darin befindlichen Einbauten ohne das Nutzfahrzeugfahrerhaus dargestellt.

Figur 2 zeigt den Stauraum 2 eines Nutzfahrzeugfahrerhauses, der im Wesentlichen in zwei Bereiche 10, 11 aufgeteilt ist. Im ersten Bereich 10, in diesem Ausführungsbeispiel dem oberen Eckbereich des Stauraums 2 befindet sich ein Wasserbehälter 3, während sich im zweiten Bereich 11 unterhalb des Wasserbehälters 3 eine Ablagefläche 4 zur Aufbewahrung weiterer Gegenstände befindet. Bei dem in Figur 2 dargestellten Ausführungsbeispiel ist die Ablagefläche 4 in Form einer aus dem Stauraum 2 herausziehbaren Schublade ausgeführt. Alternativ hierzu kann die Ablagefläche allerdings auch in Form eines fest fixierten Ablagebretts ausgeführt sein. Der Wasserbehälter 3 befindet sich im oberen Eckbereich des Stauraums 2 und ist in Art eines hohlen Prismas ausgeführt, dessen Eckkanten jeweils abgerundet sind. Der Wasserbehälter 3 passt sich somit im Wesentlichen der Innenkontur des Stauraums 2 im oberen Eckbereich an.

Um den Wasserbehälter 3 in der dargestellten Position lösbar fest zu fixieren, sind entsprechende Aufnahmemittel 5 vorgesehen. Bei dem in Figur 2 dargestellten Ausführungsbeispiel handelt es sich bei den Aufnahmemitteln 5 um schienenartige Führungselemente, entlang denen der Wasserbehälter 3, der zu diesem Zweck korrespondierende Gleitführungen aufweist, verschoben werden kann. Auf diese Weise ist es möglich, den Wasserbehälter 3 aus dem Stauraum 2 herauszuziehen, die Befestigungen 6 zu lösen sowie den Wasserbehälter 3 zu entnehmen, zu füllen und anschließend in gefülltem Zustand wieder in den Stauraum 2 einzuschieben und dort zu fixieren. Die Befestigung des Wasserbehälters 3 wird mit Hilfe von als Rastnasen ausgeführten Befestigungsmitteln 6 sichergestellt, so dass der Wasserbehälter auch während der Fahrt innerhalb des Stauraums nicht verrutschen kann. Um eine Erhöhung der Sicherheit zu erreichen, können zusätzlich zu den Rastnasen weitere Verriegelungselemente vorgesehen werden.

Darüber hinaus verfügt der Behälter 3 sowohl über eine Befüllöffnung 7 als auch über eine Entnahmeöffnung 8. Hierbei ist die Befüllöffnung im Einbauzustand des Wasserbehälters 3 im oberen Bereich des Behälters vorgesehen, während die Entnahmeöffnung, die mit Hilfe eines Drehventils verschließbar ist, in einem Tiefpunkt angeordnet ist.

Neben den zuvor geschilderten Elementen verfügt der in Figur 2 dargestellte Wasserbehälter 3 ferner über einen Haltegriff 9, der es einem Fahrer ermöglicht, den Wasserbehälter 3 auf besonders einfache Weise aus dem Stauraum herauszuziehen. Somit ist es dem Fahrer ohne großen Aufwand möglich, den Wasserbehälter 3 dem Stauraum zu entnehmen, an einem Wasserhahn zu befüllen und ihn anschließend wieder innerhalb des Stauraumes zu fixieren.

Der dargestellte Wasserbehälter 3 ist aus einem Kunststoff gefertigt, so dass die Elemente Einfüllöffnung, Entnahmeöffnung sowie Griff in einem Herstellungsgang mit dem eigentlichen Behälter 3 erzeugt werden können. Hierbei handelt es sich bei dem verwendeten Kunststoff um einen für Lebensmittel geeigneten Kunststoff.

Ergänzend zur Figur 2 ist in Figur 2 a) ein Wasserbehälter 3 in einer Ansicht, die die Befüllöffnung 7, den Haltegriff 9 sowie die Entnahmeöffnung 8 zeigt, dargestellt. Figur 2 b) zeigt hierzu eine Schnittansicht, die vornehmlich die Befüllöffnung 7 sowie die als Haltegriff 9 dienende Ausformung des Wasserbehälters 3 zeigt.

Bei dem in Figur 2 dargestellten Stauraum befindet sich im oberen Bereich eine Innenraumöffnung 13, über die ein Fahrer auch aus den Innenraum des Fahrerhauses eine Zugänglichkeit zum Stauraum erhält. Die Innenraumöffnung 13 kann zu diesem Zwecke mit einer Klappe oder einer Schiebetür derart kombiniert werden, dass der Fahrer aus dem Fahrerhaus am Wasserbehälter 3 vorbei in den Stauraum 2 greifen kann, um beispielsweise Gegenstände von der Ablagefläche 4 zu entnehmen. Wie der Figur 2 deutlich zu entnehmen ist, ist der Wasserbehälter 3 derart in einem oberen Eckbereich des Stauraums 2 neben der Innenraumöffnung 10 angeordnet, dass ein problemloses Vorbeigreifen möglich ist.

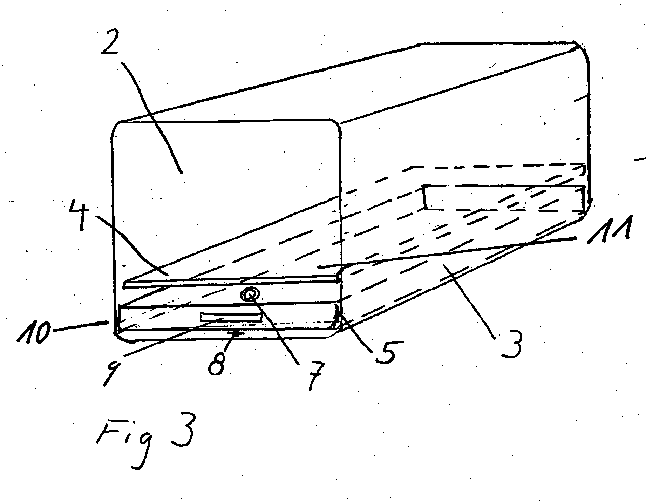

Figur 3 zeigt ein weiteres Beispiel eines erfindungsgemäß ausgeführten Stauraums. Der Wasserbehälter 3 ist in diesem Fall quaderförmig ausgebildet und im unteren Bereich des Stauraums 2 angeordnet. Die Ablagefläche 4 befindet sich oberhalb des Wasserbehälters 3 und ist in Form eines einfachen Ablagebodens ausgeführt. Grundsätzlich ist es auch bei dieser Ausführungsvariante denkbar, den Ablageboden 4 in Form einer Schublade auszuführen, so dass, analog zu dem Ausführungsbeispiel gemäß Figur 2 der Ablageboden aus dem Stauraum herausziehbar ist.

Der quaderförmige Wasserbehälter 3 verfügt analog zu dem in Figur 2 dargestellten Behälter über eine Befüllöffnung 7 an einem Hochpunkt und über eine Entnahmeöffnung 8 an einem Tiefpunkt. Bezüglich der Breite und der Länge bzw. Tief passt sich der Wasserbehälter 3 den entsprechenden Konturen des Stauraumes 2 an. Die Höhe des Wasserbehälters ist im Vergleich zu seiner Länge sowie seiner Breite vergleichsweise gering, so dass dieser geometrisch betrachtet die Form eines scheibenartigen hohlen Quaders aufweist. Der Stauraum 2 verfügt in seinem unteren Bereich unterhalb der Ablagefläche 4 über Aufnahmemittel 5, durch der der Wasserbehälter 3 wiederum lösbar fest innerhalb des Stauraums befestigbar ist. Hierbei sind die Aufnahmemitteln derart schienenartig ausgeführt, dass der Fahrer den Wasserbehälter problemlos aus dem Stauraum herausziehen, beispielsweise an einem Wasserhahn füllen und anschließend wieder in dem Stauraum einschieben kann.

Die scheibenartige Form des Wasserbehälters 3 bietet hierbei den zusätzlichen Vorteil, dass sich der Behälter auf besonders einfache Weise an einem Waschbecken auffüllen lässt, da diese Form sicherstellt, dass der Behälter in jedem Fall zwischen Waschbecken und Wasserhahn hindurchgeführt werden kann. Dies ist gerade mit einem üblichen Kanister nicht möglich und stellt oftmals für einen Fernfahrer, dem auf einer Raststätte nur die üblichen Waschenbecken zur Verfügung stehen, ein erhebliches Problem dar.

Der in Figur 3 dargestellte Wasserbehälter 3 ist etwa 25 cm breit, 55 cm lang und 7 cm hoch. Ein derartiger Wasserbehälter 3 verfügt über ein Füllvolumen von ca. 10 Litern (0,01 m³) und kann somit auch in vollständig gefülltem Zustand problemlos mit einer Hand getragen werden.

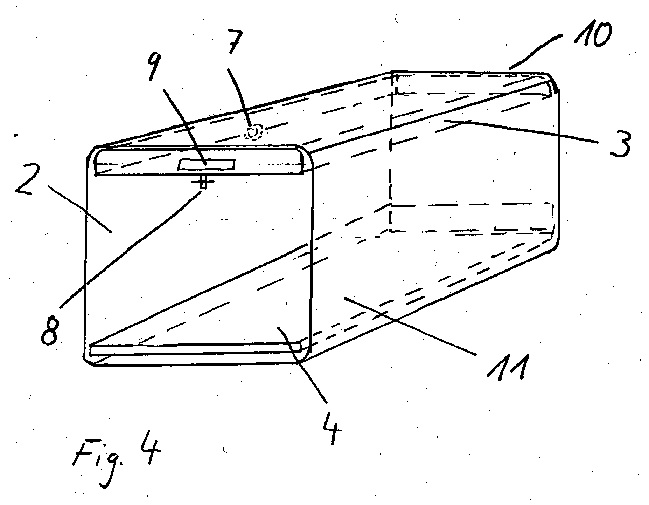

In Figur 4 ist eine weitere alternative Ausführungsform eines Stauraums 2 dargestellt, die nicht Bestandteil der Erfindung ist. Hierbei ist der im Zusammenhang mit der Beschreibung der Figur 3 erläuterte quaderförmige Wasserbehälter 3 nicht im unteren Bereich des Stauraums 2 sondern im oberen Bereich befestigt. Die Befestigung erfolgt auch in diesem Fall mit Hilfe von Aufnahmemittel 5, die ein leichtes Einschieben und Herausziehen des Wasserbehälters 3 ermöglichen. Unterhalb des Wasserbehälters 3 ist eine Ablagefläche 4 vorgesehen, die es dem Fahrer ermöglicht, Gegenstände, wie etwa Werkzeug, Lebensmittel, Straßenkarten oder ähnliche Gegenstände, die er an einem Haltepunkt benötigt, aufzubewahren. Die Ablagefläche 4 kann entweder starr innerhalb des Stauraums 2 angeordnet sein oder aber seinerseits über Mittel verfügen, die ein Herausziehen der Ablagefläche nach Art einer Schublade ermöglichen.

### Bezugszeichenliste

- 1: Nutzfahrzeugfahrerhaus
- 2: Stauraum
- 3: Wasserbehälter
- 4: Ablagefläche
- 5: Aufnahmemittel
- 6: Befestigungsmittel
- 7: Befüllöffnung
- 8: Entnahmeöffnung
- 9: Haltegriff
- 10: erster Bereich
- 11: zweiter Bereich
- 12: Stauraumklappe
- 13: Innenraumöffnung

## Patentansprüche

1. Fahrerhaus eines Nutzfahrzeugs mit einem von außen zugänglichen, mittels einer Klappe (12) verschließbaren Stauraum (2), der im hinteren Bereich einer Fahrerhausseitenwand zumindest teilweise oberhalb eines Kotflügels angeordnet ist, wobei eine Innenraumöffnung (13) vorgesehen ist, durch die der Stauraum (2) aus einem Fahrerhausinnenraum zugänglich ist, und mit einem innerhalb des Stauraums (2) befestigten Wasserbehälter (3) zur Bevorratung von Wasser, wobei der Stauraum (2) in wenigstens zwei Bereiche (10, 11) aufgeteilt ist, wobei in einem ersten Bereich (10) wenigstens eine Aufnahme (5) zur Befestigung des bei geöffneter Klappe (12) von außen zugänglichen Wasserbehälters (3) und in einem zweiten Bereich (11) eine Ablagefläche (4) zur Aufbewahrung weiterer Gegenstände vorgesehen ist, und wobei der Wasserbehälter (3) innerhalb des Stauraums (2) so angeordnet ist, dass die Ablagefläche (4) vom Fahrerhausinnenraum frei zugänglich ist dergestalt, dass der Wasserbehälter (4) unterhalb der Ablagefläche (4) angeordnet ist oder der Wasserbehälter (3) in einem oberen Eckbereich des Stauraums (2) so befestigt ist, dass ein freier Zugriff an dem Wasserbehälter (3) vorbei auf die Ablagefläche (4) möglich ist, und wobei der Wasserbehälter (3) lösbar fest in der Aufnahme (5) befestigt ist, und wobei Aufnahmemittel (5) in Form von schienenartigen Führungselementen vorgesehen sind, entlang denen der Wasserbehälter (3), der zu diesem Zweck korrespondierende Gleitführungen aufweist, verschiebbar ist.

2. Fahrerhaus nach Anspruch 1,
**dadurch gekennzeichnet, dass** der Wasserbehälter (3) einen Handgriff (9) aufweist.

3. Fahrerhaus nach Anspruch 1 oder 2,
**dadurch gekennzeichnet, dass** der Wasserbehälter (3) in Art eines Quaders ausgeführt ist, der sich in befestigtem Zustand direkt unterhalb der oberen Begrenzungswand des Stauraums (2) erstreckt.

4. Fahrerhaus nach Anspruch 1 oder 2,
**dadurch gekennzeichnet, dass** der Wasserbehälter (3) in Art eines geraden Prismas ausgeführt ist und in einem Eckbereich des oberen Bereichs des Stauraums (2) angeordnet ist.

5. Fahrerhaus nach einem der Ansprüche 1 bis 4,
**dadurch gekennzeichnet, dass** der Wasserbehälter (3) auf einer in Einbaulage oberen Seite eine verschließbare Einfüllöffnung (7) aufweist.

6. Fahrerhaus nach einem der Ansprüche 1 bis 5,
**dadurch gekennzeichnet, dass** der Wasserbehälter (3) auf einer in Einbaulage unteren Seite eine verschließbare Auslassöffnung (8) aufweist.

7. Fahrerhaus nach Anspruch 6,
**dadurch gekennzeichnet, dass** die verschließbare Auslassöffnung (8) in Art eines Drehventils ausgeführt ist.

## Claims

1. A driver cab of a commercial vehicle with a storage compartment (2) which is accessible from the outside, is closable by means of a flap (12) and is arranged at least partially above a mudguard in the rear region of a side wall of the driver cab, wherein an interior opening (13) is provided, through which the storage compartment (2) is accessible from the interior of the driver cab, and with a water tank (3) which is fastened within the storage compartment (2) and is intended for storing water, wherein the storage compartment (2) is divided into at least two regions (10, 11), wherein at least one receptacle (5) for fastening the water tank (3), which is accessible from the outside when the flap (12) is open, is provided in a first region (10), and a depositing surface (4) for storing further items is provided in a second region (11), and wherein the water tank (3) is arranged within the storage compartment (2) in such a manner that the depositing surface (4) is freely accessible from the interior of the driver cab and such that the water tank (4) is arranged below the depositing surface (4), or the water tank (3) is fastened in an upper corner region of the storage compartment (2) in such a manner that free access to the water tank (3) past the depositing surface (4) is possible, and wherein the water tank (3) is fixedly fastened in a releasable manner in the receptacle (5), and wherein receiving means (5) in the form of rail-like guide elements are provided, along which the water tank (3), which has corresponding sliding guides for this purpose, is displaceable.

2. The driver cab according to Claim 1, **characterized in that** the water tank (3) has a handle (9).

3. The driver cab according to Claim 1 or 2, **characterized in that** the water tank (3) is designed in the manner of a cuboid which, in the fastened state, extends directly below the upper boundary wall of the storage compartment (2).

4. The driver cab according to Claim 1 or 2, **characterized in that** the water tank (3) is designed in the manner of a right prism and is arranged in a corner region of the upper region of the storage compartment (2).

5. The driver cab according to one of Claims 1 to 4, **characterized in that** the water tank (3) has a closable filling opening (7) on an upper side in the installed position.

6. The driver cab according to one of Claims 1 to 5, **characterized in that** the water tank (3) has a closable outlet opening (8) on a lower side in the installed position.

7. The driver cab according to Claim 6, **characterized in that** the closable outlet opening (8) is designed in the manner of a rotary valve.

## Revendications

1. Cabine de conducteur d'un véhicule utilitaire comprenant un espace de rangement (2) accessible depuis l'extérieur, pouvant être fermé au moyen d'un volet (12), qui est disposé dans la partie arrière d'une paroi latérale de la cabine de conducteur au moins en partie au-dessus d'un garde-boue, une ouverture d'habitacle (13) étant prévue, à travers laquelle l'espace de rangement (2) peut être accessible depuis un habitacle de la cabine de conducteur, et comprenant un réservoir d'eau (3) fixé à l'intérieur de l'espace de rangement (2) pour stocker de l'eau, l'espace de rangement (2) étant divisé en au moins deux régions (10, 11), dans une première région (10), étant prévu au moins un logement (5) pour fixer le réservoir d'eau (3) accessible depuis l'extérieur lorsque le volet (12) est ouvert, et dans une deuxième région (11) étant prévue une surface d'étagère (4) pour stocker d'autres objets, et le réservoir d'eau (3) étant disposé à l'intérieur de l'espace de rangement (2) de telle sorte que la surface d'étagère (4) soit librement accessible depuis l'habitacle de la cabine de conducteur, par le fait que le réservoir d'eau (4) est disposé sous la surface d'étagère (4) ou que le réservoir d'eau (3) est fixe dans une région de coin supérieure de l'espace de rangement (2) de telle sorte qu'un libre accès au réservoir d'eau (3) devant la surface d'étagère (4) soit possible, et le réservoir d'eau (3) étant fixé de manière fixe et amovible dans le logement (5), et des moyens de logement (5) sous forme d'éléments de guidage de type rails étant prévus, le long desquels le réservoir d'eau (3) qui présente des glissières correspondantes à cet effet, peut être déplacé.

2. Cabine de conducteur selon la revendication 1,
**caractérisée en ce que** le réservoir d'eau (3) présente une poignée (9).

3. Cabine de conducteur selon la revendication 1 ou 2,
**caractérisée en ce que** le réservoir d'eau (3) est réalisé à la manière d'un parallélépipède qui s'étend dans l'état fixé directement en dessous de la paroi de limitation supérieure de l'espace de rangement (2).

4. Cabine de conducteur selon la revendication 1 ou 2,
**caractérisée en ce que** le réservoir d'eau (3) est réalisé à la manière d'un prisme droit et est disposé dans une région de coin de la région supérieure de l'espace de rangement (2).

5. Cabine de conducteur selon l'une quelconque des revendications 1 à 4,
**caractérisée en ce que** le réservoir d'eau (3) présente, sur un côté supérieur dans la position d'installation, une ouverture de remplissage refermable (7).

6. Cabine de conducteur selon l'une quelconque des revendications 1 à 5,
**caractérisée en ce que** le réservoir d'eau (3) présente, sur un côté inférieur dans la position d'installation, une ouverture de sortie refermable (8).

7. Cabine de conducteur selon la revendication 6,
**caractérisée en ce que** l'ouverture de sortie refermable (8) est réalisée à la manière d'une vanne rotative.
